(19) **Europäisches Patentamt**

**European Patent Office**

**Office européen des brevets**

(11) **EP 0 567 373 B1**

(12) **FASCICULE DE BREVET EUROPEEN**

(45) Date de publication et mention
de la délivrance du brevet:
**19.03.1997 Bulletin 1997/12**

(21) Numéro de dépôt: **93400979.6**

(22) Date de dépôt: **15.04.1993**

(51) Int. Cl.[6]: **C01G 49/14**, C01G 1/10,
C01F 7/50, C01F 5/40,
C01F 7/74, C01G 3/10,
C01G 9/06, C01G 37/08,
C01G 45/10, C01G 51/10,
C01G 53/10

(54) **Sulfate ferreux hydraté fluide, et procédé pour fluidiser des sulfates métalliques polyhydratés**

Fliessendes hydratisiertes Eisen-II-Sulfat und Verfahren zur Verflüssigung von polyhydratisierten Metallsulfaten

Fluid hydrated ferrous sulfate and process for fluidizing polyhydrated metallic sulfates

(84) Etats contractants désignés:
**AT BE CH DE DK ES GB GR IE IT LI LU NL PT SE**

(30) Priorité: **24.04.1992 FR 9205066**

(43) Date de publication de la demande:
**27.10.1993 Bulletin 1993/43**

(73) Titulaire: **SOCADOUR**
**F-40220 Tarnos (FR)**

(72) Inventeurs:
• **Ardiaco, Jean-Claude**
**F-64600 Anglet (FR)**

• **Kneip, Alain**
**F-40390 Saint-Martin de Seignanx (FR)**

(74) Mandataire: **CABINET BONNET-THIRION**
**12, Avenue de la Grande-Armée**
**75017 Paris (FR)**

(56) Documents cités:
EP-A- 0 107 751                    WO-A-84/01942
DE-A- 3 644 164

• **CHEMICAL ABSTRACTS, vol. 103, no. 4, Juillet 1985, Columbus, Ohio, US; abstract no. 24458b, ERHIO PERTTI 'AN IRON(II) SALT IN A FREE-FLOWING FORM' page 110 ;**

**Description**

L'invention se rapporte à un sulfate ferreux heptahydraté technique, traité pour éliminer des traces d'eau intercristalline contenant de l'acide libre et ainsi le rendre susceptible d'écoulement libre, comportant, outre une partie majeure de cristaux de sulfate de fer, une part mineure de sels calciques cristallisés hydratés dont au moins du sulfate dihydraté.

L'invention se rapporte également à un procédé de traitement de sulfates métalliques polyhydratés résultant d'une cristallisation progressive de solutions saturées acides et présentant des traces intercristallines d'eau contenant de l'acide libre où, pour supprimer la tendance des cristaux à s'agglomérer et les rendre aptes à s'écouler librement, on neutralise l'acide libre et l'on fixe l'eau au moins en partie sous forme d'eau de constitution de cristaux de sels hydratés.

Le sulfate ferreux heptahydraté, appelé communément sulfate neige en raison de son aspect vert pâle et de sa consistance, se présente sous forme de cristaux dont la taille s'étage entre 0,1 et 3 mm liés par un film liquide constitué d'une solution aqueuse acide saturée en sulfate ferreux. Sa teneur en eau intercristalline est comprise entre 2 et 6 % en poids, et la teneur en acide libre est de l'ordre de 1,5 à 2 % en poids.

Le sulfate neige est un sous-produit de l'industrie, et provient essentiellement :

- de l'industrie chimique (fabrication d'oxyde de titane) ;
- de l'industrie métallurgique (décapage de tôles d'acier).

La structure des cristaux varie ; le sulfate d'origine chimique cristallise dans une structure rhombique, et le sulfate d'origine métallurgique présente une structure tabulaire et aciculaire.

Sans traitement le sulfate neige se manutentionne mal. En vrac il forme des masses agglomérées par le film liquide qui lui confère un contact collant. Il sèche lentement à l'air sec, en surface, en formant des mottes. En grandes masses, une partie de l'eau intercristalline percole à travers l'agglomérat de cristaux, les couches inférieures contenant alors plus d'eau intercristalline que les couches supérieures. En aucun cas les masses ne deviennent fluides, à l'instar d'un sable sec, et propres à une manutention convenable. En outre, son acidité le rend impropre à de nombreuses applications. Par ailleurs la présence de l'acide, qui inhibe l'oxydation du fer à la valence 3 empêche une dessication efficace et durable du sulfate heptahydraté. Si l'on tente de pousser la dessication en chassant l'acide libre à température élevée, le sulfate ferreux perd une partie de son eau de cristallisation et forme une masse dure.

Le document de brevet FR-A-2 566 383 décrit un procédé de traitement (ou de fluidisation, en argot de métier) de sulfate ferreux cristallisé sous forme heptahydratée, avec des traces intercristallines d'eau contenant de l'acide libre où pour supprimer la tendance des cristaux à s'agglomérer et les rendre aptes à s'écouler librement on élimine les traces d'eau et on neutralise l'acide libre, suivant lequel on ajoute au sulfate ferreux, en mélange intime, un sulfate métallique apte à cristalliser dans une forme hydratée stable et ajouté dans une forme en défaut réversible d'hydratation par rapport à ladite forme hydratée stable, en quantité au moins suffisante pour compenser l'eau en traces intercristallines, et on ajoute en outre un agent neutralisant tel que l'acide libre soit entièrement fixé.

Typiquement le sulfate métallique en défaut d'hydratation est du sulfate ferreux partiellement déshydraté pour que, en moyenne, il contienne par mole de sulfate ferreux 1 à 5 moles d'eau de cristallisation, tandis que l'agent neutralisant est du carbonate de calcium.

L'eau intercristalline se trouve, dans le produit traité, fixée sous forme d'eau de cristallisation aussi bien de sulfate ferreux heptahydraté à partir du sulfate partiellement déshydraté, que de sulfate de calcium par l'acide sulfurique libre, avec dégagement de gaz carbonique.

Le procédé de fluidisation qui vient d'être rappelé présente l'avantage de n'introduire qu'une faible quantité de matière autre que le sulfate ferreux, à savoir le gypse.

Lorsque le sulfate neige brut est relativement pur (sulfate d'origine métallurgique) ou lorsqu'on est peu exigeant sur le titre en fer du sulfate, on peut utiliser, pour le fluidiser, des desséchants autres que le sulfate ferreux partiellement déshydraté, par exemple de la silice colloïdale, et des neutralisants autres que calciques.

Mais, en général, les résultats sont peu satisfaisants.

Les sulfates neige d'origine chimique apparaissent plus difficiles à fluidiser, probablement parce qu'ils contiennent des impuretés dissoutes avec le fer dans les attaques sulfuriques de minerais. Dans le procédé au sulfate ferreux partiellement déshydraté, on est conduit à augmenter fortement les quantités de ce sulfate déshydraté dans le sulfate neige, ce qui augmente les coûts de traitement. En outre le sulfate fluidisé acquiert une teinte brune techniquement sans inconvénient mais commercialement peu attrayante.

Il apparaissait souhaitable de préparer un sulfate de fer heptahydraté fluidisé qui contienne peu de matières autres que du sulfate de fer, d'un excellent comportement en manutention, stable, et d'un aspect attrayant.

Ce résultat est obtenu par un procédé de traitement de sulfates métalliques polyhydratés résultant d'une cristallisation progressive de solutions saturées acides et présentant des traces intercristallines d'eau contenant de l'acide libre où, pour supprimer la tendance des cristaux à s'agglomérer et les rendre aptes à s'écouler librement, on neutralise l'acide libre et l'on fixe l'eau au moins en partie sous forme d'eau de constitution de cristaux de sels hydratés, caractérisé en ce que l'on mélange intimement auxdits sulfates métalliques polyhydratés une quantité efficace d'au moins un

EP 0 567 373 B1

phosphate calcique sans eau de cristallisation pulvérisé contenant au moins un atome de calcium pour un atome de phosphore.

Comme on le précisera plus loin, le sulfate métallique polyhydraté particulièrement visé dans l'invention est le sulfate ferreux heptahydraté technique. Un autre aspect de l'invention concerne donc un tel sulfate technique résultant du traitement ci-dessus et possédant les caractéristiques indiquées dans la revendication 7.

Les phosphates calciques anhydres cités plus haut sont des orthophosphates bi ou tricalciques, pyrophosphates et métaphosphates. Ces phosphates calciques, en présence d'eau et d'acide sulfurique, donnent les réactions suivantes :

$$\text{- phosphate bicalcique } 2\,CaHPO_4 + H_2SO_4 + 3H_2O \rightarrow Ca(H_2PO_4)_2, H_2O + CaSO_4, 2H_2O \tag{1}$$

$$\text{- phosphate tricalcique } Ca_3(PO_4)_2 + 2H_2SO_4 + 8H_2O \rightarrow 2\,CaHPO_4, 2H_2O + 2\,CaSO_4, 2H_2O \tag{2}$$

$$\text{- pyrophosphate } Ca_2P_2O_7 + 6H_2O + H_2SO_4 \rightarrow Ca(H_2PO_4)_2, H_2O + CaSO_4, H_2O \tag{3}$$

$$\text{- métaphosphate } Ca(PO_3)_2 + 3H_2O \rightarrow Ca(H_2PO_4)_2, H_2O \text{ (4)} \tag{4}$$

Ces différentes réactions absorbent de l'eau et de l'acide sulfurique en quantités différentes.

Dans la réaction (1), 100 g de phosphate fixent 20 g d'eau et 36 g d'acide sulfurique ; dans la réaction (2), 100 g de phosphate fixent 46 g d'eau et 61 g d'acide sulfurique ; dans la réaction (3), 100 g de phosphate fixent 43 g d'eau et 39 g d'acide sulfurique ; dans la réaction (4), 100 g de phosphate fixent 30 g d'eau. On comprend que, selon les quantités respectives d'eau et d'acide contenues dans le sulfate neige, on peut jouer sur la nature et la quantité de phosphate ajouté. Par ailleurs 100 g de carbonate de calcium fixent 18 g d'eau et 98 g d'acide sulfurique.

De plus on a constaté qu'il n'était pas indispensable de viser à fixer toute l'eau intercristalline ; d'une part la cristallisation du sulfate ferreux dissous à saturation dans l'eau intercristalline fixe quelque 13 % de cette eau; d'autre part, lorsque l'acide libre a été entièrement fixé, l'eau peut s'évaporer plus aisément, et la chaleur dégagée par la neutralisation de l'acide libre et la cristallisation des formes hydratées favorise cette évaporation.

En outre les ions phosphates acides ont un effet tampon selon l'équation :

$$(HPO_4)^{2-} + H^+ \rightleftarrows (H_2PO_4)^- \tag{5}$$

Le pH résultant, inférieur à 7, inhibe l'oxydation du fer (II) en fer (III). Le sulfate ferreux heptahydraté traité garde sa teinte vert pâle.

L'essentiel étant la fixation de l'acide sulfurique, on préférera ajouter au sulfate neige un excès de méta, pyro et orthophosphates, qui se retrouveront intacts ou hydratés dans le produit déterminé.

On préférera que le sulfate ferreux traité contienne, en poids, entre 90 et 97 % de cristaux de sulfate ferreux heptahydratés. En dessous de 90 %, le titre en fer du produit serait insuffisant. Si le produit traité contenait moins de 3 % en poids de matières autres que du sulfate ferreux heptahydraté, ce serait le signe que le produit de départ était d'une pureté telle que le traitement ne se serait pas imposé.

La Demanderesse, au vu de l'efficacité de l'ajout des phosphates comme évoqué précédemment, a pris conscience que le procédé devait être applicable à d'autres sulfates métalliques polyhydratés obtenus par le même processus de cristallisation progressive de solutions saturées acides, les sulfates polyhydratés étant récupérés cristallisés nécessairement humides, l'eau intercristalline contenant de l'acide libre et du sulfate à saturation. Cela a été vérifié et en conséquence l'invention propose un procédé de traitement de sulfates métalliques polyhydratés résultant d'une cristallisation progressive de solutions saturées acides et présentant des traces intercristallines d'eau contenant de l'acide libre, où, pour supprimer la tendance des cristaux à s'agglomérer et les rendre aptes à s'écouler librement, on neutralise l'acide libre et l'on fixe l'eau au moins en partie sous forme d'eau de constitution de cristaux de sels hydratés, caractérisé en ce que l'on mélange intimement auxdits sulfates métalliques polyhydratés une quantité efficace d'au moins un phosphate calcique sans eau de cristallisation pulvérisé contenant au moins un atome de calcium pour un atome de phosphore.

La vérification a porté notamment sur des sulfates, outre le fer (II), de cuivre (II), d'aluminium, de magnésium, de zinc, de chrome, de manganèse, de nickel et de cobalt.

Notamment dans le cas du sulfate ferreux on peut ajouter, outre les phosphates, un agent desséchant tel qu'un sulfate ferreux partiellement déshydraté et/ou un agent neutralisant tel que le carbonate de calcium.

De préférence la quantité et la nature du phosphate calcique ajouté sont déterminées, à partir des teneurs en eau intercristalline et acide sulfurique libre, de telle sorte que l'acide libre soit entièrement fixé, et qu'une partie majeure de l'eau intercristalline soit fixée en tant qu'eau de constitution de sulfate de calcium dihydraté, phosphate bicalcique dihydraté et phosphate calcique monohydraté.

On se référera à ce qui a été dit précédemment, et aux équations 1 à 4 pour déterminer la quantité et la nature du phosphate calcique ; bien entendu le prix des phosphates est également à prendre en considération.

Dans le cas du traitement de sulfate ferreux heptahydraté, notamment, on a constaté qu'une phase de maturation d'au moins 12 heures et pouvant aller jusqu'à 72 heures, au cours de laquelle le sulfate additionné de phosphates est abandonné en vrac sur une aire, avait un effet bénéfique sur la fluidité du produit. On peut attribuer cet effet à un grossissement des cristaux, et à une évaporation d'eau.

L'invention sera mieux comprise à la lumière des exemples suivants :

On opère sur du sulfate neige d'origine chimique (production d'oxyde de titane) contenant de 2 à 6 % d'eau et 1,5 à 2 % d'acide libre, en poids.

Exemple 1. A 500 kg de sulfate neige brut, on ajoute 75 kg d'un sulfate ferreux partiellement déshydraté (correspondant en moyenne à un tétrahydrate), et 25 kg de phosphate bicalcique finement broyé. La granulométrie est inférieure à 75 µm. On mélange dans un mélangeur pendant 10 minutes, puis on ajoute 5 kg de carbonate de calcium ; on mélange encore 5 minutes.

On obtient un produit vert pâle, bien fluide, c'est-à-dire présentant un angle de talus faible et bien régulier, ne formant pas de mottes. A 72 heures on ne constate pas d'évolution de la teinte et des caractéristiques d'écoulement.

Exemple 2. A 500 kg de sulfate neige brut, on ajoute 10 kg de phosphate bicalcique ; la granulométrie est inférieure à 250 µm. On mélange pendant 10 minutes dans le même appareil que précédemment. On obtient un produit vert pâle, fluide et stable après 48 heures.

Exemple 3. A 500 kg de sulfate neige brut, on ajoute 10 kg de phosphate tricalcique fin obtenu par voie chimique. On mélange comme précédemment pendant 10 minutes. On obtient un produit vert pâle, fluide et stable après 24 heures.

Exemple 4. A 500 kg de sulfate neige brut, on ajoute 10 kg de phosphate tricalcique originaire de Syrie, avec une granulométrie inférieure à 150 µm. On mélange 10 minutes. On note un léger dégagement de fluor. On obtient un produit vert pâle, un peu rabattu par rapport au produit de l'exemple 3, fluide et stable après 24 heures.

Exemple 5. A 500 kg de sulfate neige brut, on ajoute 10 kg de phosphate tricalcique d'origine algérienne, avec une granulométrie inférieure à 150 µm. On mélange 10 minutes comme précédemment. Comme à l'exemple 4, on note un léger dégagement de fluor. On obtient un produit vert pâle, fluide mais avec un angle de talus plus élevé qu'à l'exemple précédent, et stable après 24 heures.

Exemple 6. A 500 kg de sulfate neige brut, on ajoute 5 kg de phosphate tricalcique originaire de Syrie, et 10 kg de phosphate bicalcique comme à l'exemple 1. On mélange 10 minutes. On obtient un produit vert pâle, stable après 24 heures, la fluidité n'étant acquise de façon satisfaisante qu'après 24 heures.

Exemple 7. A 500 kg de sulfate neige brut, on ajoute 15 kg de phosphate bicalcique comme à l'exemple 1. On mélange pendant 10 minutes et on stocke pendant 24 heures. Le produit est vert pâle, fluide après le temps de stockage et stable.

Exemple 8. A 500 kg de sulfate neige brut, on ajoute 75 kg de sulfate ferreux partiellement déshydraté comme à l'exemple 1, 20 kg de phosphate tricalcique originaire de Syrie, et 5 kg de carbonate de calcium. On mélange pendant 10 minutes. On obtient un mélange vert pâle, parfaitement fluide au sortir du mélangeur et stable dans le temps.

Exemple 9. On répète l'exemple précédent, sauf que l'on ajoute seulement 15 kg de phosphate tricalcique au lieu de 20. La fluidité est également immédiate, mais la couleur verte est moins lavée.

Exemple 10. A 500 kg de sulfate neige brut, on ajoute 25 kg de phosphate bicalcique comme à l'exemple 1. Après 10 minutes de mélange, on obtient un produit semi-fluide et gris. Après 16 heures de stockage, on reprend successivement trois parts de 100 kg.

A la première part, on ajoute 5 kg de sulfate ferreux partiellement déshydraté ; après 10 minutes de mélange, la fluidité est devenue bonne.

A la seconde part, on ajoute 1 kg de phosphate bicalcique ; le mélange après 10 minutes est fluide.

A la troisième part, on ajoute 1 kg de phosphate tricalcique d'origine syrienne. Après mélange, la fluidité est bonne.

D'autres essais, non rapportés ici, ont confirmé les conclusions déjà exposées sur les procédés. On notera que les échantillons de sulfate ferreux traité, contenus dans des flacons de verre, montrent des cristaux aptes à adhérer au verre par charge électrostatique, ce qui démontrerait l'efficacité de l'élimination de l'eau intercristalline, à temps.

Parallèlement on a remarqué que les traitements selon l'invention provoquaient des dégagements de poussière incomparablement plus faibles que les procédés antérieurs. On suppose que la réduction du taux de poussière en opération résulte de mêmes causes que la susceptibilité de charge électrique.

D'autres essais encore, non rapportés, ont confirmé l'efficacité des traitements selon l'invention pour la fluidisation de sulfate cuivrique, sulfate d'aluminium, sulfate de zinc, sulfate de magnésium, sulfate de chrome, sulfate de manganèse, sulfate de nickel et sulfate de cobalt, obtenus au degré d'hydratation maximal par concentration de liqueurs acides saturées en ces sulfates, et rien n'est apparu qui fasse obstacle à la fluidisation d'autres sulfates cristallisant sous forme hydratée stable.

Il va sans dire que le traitement implique que l'on utilise des phosphates en quantité au moins suffisante pour éliminer la totalité de l'acide libre. D'autre part, il est inutile d'utiliser des excès importants de réactifs.

On conçoit qu'ainsi l'invention n'est pas limitée aux exemples décrits, mais en embrasse toutes les variantes d'exécution, dans le cadre des revendications.

## Revendications

1. Procédé de traitement de sulfates métalliques polyhydratés résultant d'une cristallisation progressive de solutions saturées acides et présentant des traces intercristallines d'eau contenant de l'acide libre où, pour supprimer la tendance des cristaux à s'agglomérer et les rendre aptes à s'écouler librement, on neutralise l'acide libre et l'on fixe l'eau au moins en partie sous forme d'eau de constitution de cristaux de sels hydratés, caractérisé en ce que l'on mélange intimement auxdits sulfates métalliques polyhydratés une quantité efficace d'au moins un phosphate calcique sans eau de cristallisation pulvérisé contenant au moins un atome de calcium pour un atome de phosphore.

2. Procédé suivant la revendication 1, caractérisé en ce que ledit sulfate métallique polyhydraté est pris parmi les sulfates de Fer II, Cuivre II, aluminium, magnésium, zinc, chrome, manganèse, nickel et cobalt.

3. Procédé suivant la revendication 2, caractérisé en ce que ledit sulfate métallique polyhydraté est du sulfate ferreux heptahydraté technique.

4. Procédé suivant l'une quelconque des revendications 1 à 3, caractérisé en ce que, outre les phosphates calciques, on ajoute au sulfate métallique en mélange intime un agent desséchant et/ou un agent neutralisant connu en soi.

5. Procédé suivant une quelconque des revendications 1 à 3, caractérisé en ce que les quantités et la nature du phosphate calcique ajouté sont déterminées, à partir des teneurs en eau intercristalline et acide sulfurique libre de telle sorte que l'acide libre soit entièrement fixé sous forme de sulfate de calcium, et qu'une part majeure d'eau intercristalline soit fixée en tant qu'eau de constitution de sulfate de calcium dihydraté, phosphate bicalcique dihydraté et phosphate monocalcique monohydraté.

6. Procédé suivant la revendication 3, caractérisé en ce que le mélange de sulfate ferreux et phosphates calciques subit une phase de maturation durant au moins 12 heures, par dépôt en vrac sur une aire avant reprise et emballage.

7. Sulfate ferreux hydraté technique, traité par un procédé suivant la revendication 3, et contenant de ce fait, outre une part majeure de cristaux de sulfate ferreux heptahydraté, une part mineure de sels calciques cristallisés hydratés, caractérisé en ce que lesdits sels calciques cristallisés hydratés sont, pour l'essentiel, outre le sulfate de calcium dihydraté, des phosphates pris parmi $CaPO_4H, 2H_2O$ et $Ca(PO_4H_2)_2, H_2O$.

8. Sulfate ferreux selon la revendication 1, caractérisé en ce qu'il contient en outre des phosphates anhydres, pris parmi les métaphosphates, pyrophosphates et orthophosphates de calcium.

9. Sulfate ferreux selon l'une des revendications 7 et 8, caractérisé en ce qu'il contient entre 90 et 97 % en poids de cristaux de sulfate de fer heptahydraté.

## Claims

1. A process for the treatment of polyhydrated metallic sulphates resulting from progressive crystallisation of saturated acid solutions having intercrystalline traces of water containing free acid wherein, to suppress the tendency of the crystals to agglomerate and to make them capable of flowing freely, the free acid is neutralized and the water is fixed at least in part in the form of water of constitution of hydrated salts crystals, characterized by intimately mixing with said polyhydrated metallic sulphates an effective amount of at least one calcium phosphate without water of crystallization in powdered form containing at least one atom of calcium for one atom of phosphorus.

2. A process according to claim 1 characterised in that said polyhydrated metallic sulphate is selected from the sulphates of iron II, copper II, aluminium, magnesium, zinc, chromium, manganese, nickel and cobalt.

3. A process according to claim 2 characterised in that said polyhydrated metallic sulphate is technical heptahydrated ferrous sulphate.

4. A process according to any one of claims 1 to 3 characterised in that besides calcium phosphates a drying agent and/or a neutralising agent which is known per se is added to the metallic sulphate in the form of an intimate mixture.

5. A process according to any one of claims 1 to 3 characterised in that the amounts and the nature of the calcium phosphate added are determined on the basis of the contents of intercrystalline water and free sulphuric acid in such a way that the free acid is entirely fixed in the form of calcium sulphate and that a major part of intercrystalline water is fixed as water of constitution of dihydrated calcium sulphate, dihydrated bicalcium phosphate and monohydrated monocalcium phosphate.

6. A process according to claim 3 characterised in that the mixture of ferrous sulphate and calcium phosphates is subjected to a maturing phase for a period of at least 12 hours by being deposited loose on a surface before being taken up and package.

7. A technical hydrated ferrous sulphate treated by a process according to claim 3 and accordingly containing, besides a major part of crystals of heptahydrated ferrous sulphate, a minor part of hydrated crystallized calcium salts, characterised in that said hydrated crystallised calcium salts, besides dihydrated calcium sulphate, are essentially phosphates selected from $CaPO_4H, 2H_2O$ and $Ca(PO_2H_4)_2, H_2O$.

8. A ferrous sulphate according to claim 7 characterised in that it further contains anhydrous phosphates selected from calcium metaphosphates, pyrophosphates and orthophosphates.

9. A ferrous sulphate according to one of clams 7 and 8 characterised in that it contains between 90 and 97% by weight of heptahydrated iron sulphate crystals.

**Patentansprüche**

1. Verfahren zum Behandeln von polyhydratisierten Metallsulfaten, die durch eine fortschreitende Kristallisation von sauren, gesättigten Lösungen gebildet werden und interkristalline Spuren von Wasser mit freier Säure aufweisen, worin man, um das Bestreben der Kristalle zur Agglomeration zu unterdrücken und sie in die Lage zu versetzen, frei zu fließen, die freie Säure neutralisiert und das Wasser mindestens teilweise in Form von Wasser mit der Beschaffenheit von hydratisierten Salzkristallen bindet, dadurch gekennzeichnet, daß man mit den genannten polyhydratisierten Metallsulfaten eine wirksame Menge mindestens eines pulverförmigen, kristallwasserfreien Calciumphosphates mit mindestens einem Calciumatom pro Phosphoratom innig vermischt.

2. Verfahren nach Anspruch 1, dadurch gekennzeichnet, daß das polyhydratisierte Metallsulfat ausgewählt wird unter den Sulfaten des Eisen(II), Kupfer(II), Aluminium, Magnesium, Zink, Chrom, Mangan, Nickel und Kobalt.

3. Verfahren nach Anspruch 2, dadurch gekennzeichnet, daß das polyhydratisierte Metallsulfat technisches Eisen(II)sulfat-Heptahydrat ist.

4. Verfahren nach einem beliebigen der Ansprüche 1 bis 3, dadurch gekennzeichnet, daß man neben den Calciumphosphaten dem Metallsulfat in inniger Mischung ein Trockenmittel und/oder ein neutralisierendes Mittel zusetzt, welches als solches bekannt ist.

5. Verfahren nach einem beliebigen der Ansprüche 1 bis 3, dadurch gekennzeichnet, daß die Mengen und die Beschaffenheit des beigefügten Calciumphosphats ausgehend von den Gehalten an interkristallinem Wasser und an freier Schwefelsäure derart bestimmt werden, daß die freie saure vollständig in Form von Calciumsulfat gebunden wird, und daß ein größerer Teil des interkristallinen Wassers als Wasser in der Zusammensetzung Calciumsulfat-Dihydrat, Dicalciumphosphat-Dihydrat und Monocalciumphosphat-Monohydrat gebunden wird.

6. Verfahren nach Anspruch 3, dadurch gekennzeichnet, daß die Mischung von Eisen(II)sulfat und Calciumphosphaten für eine Dauer von mindestens zwölf Stunden durch Lagerung in loser Schüttung auf einem Untergrund vor der Rückkehr und dem Verpacken einer Alterungsphase unterworfen wird.

7. Technisches, hydratisiertes Eisen(II)sulfat, behandelt nach einem Verfahren gemäß Anspruch 3 und demzufolge neben einem größeren Anteil an Kristallen von Eisen(II)sulfat-Heptahydrat einen kleineren Anteil an kristallisierten, hydratisierten Calciumsalzen enthaltend, dadurch gekennzeichnet, daß die kristallisierten, hydratisierten Calciumsalze im wesentlichen neben Calciumsulfat-Dihydrat Phosphate sind, die unter $CaPO_4H, 2H_2O$ und $Ca(PO_4H_2)_2, H_2O$ ausgewählt sind.

8. Eisen(II)sulfat nach Anspruch 7, dadurch gekennzeichnet, daß es zusätzlich wasserfreie Phosphate, ausgewählt unter den Metaphosphaten, Pyrophosphaten und Orthophosphaten des Calciums, enthält.

9. Eisen(II)sulfat nach einem der Ansprüche 7 und 8, dadurch gekennzeichnet, daß es zwischen 90 und 97 Gew.-% Kristalle von heptahydratisiertem Eisensulfat enthält.